# EUROPÄISCHE PATENTSCHRIFT

(11) **EP 2 404 704 B1**
(45) Veröffentlichungstag und Bekanntmachung des Hinweises auf die Patenterteilung: **07.09.2016**
(21) Anmeldenummer: 11004336.1
(22) Anmeldetag: 26.05.2011
(51) Int. Cl.: B24B 55/04, B24B 27/00

(54) **Schleifmaschine mit einer am Scheibenschutz verstellbar angebrachten Kühlmitteldüse**
Grinding machine with coolant nozzle adjustable mounted on protection hood
Affûteuse avec une buse de refroidissement réglable monté sur le capot de protection

(30) Priorität: 09.07.2010 DE 102010026777
(43) Veröffentlichungstag der Anmeldung: 11.01.2012
(73) Patentinhaber: Haas Schleifmaschinen GmbH, 78647 Trossingen (DE)
(72) Erfinder: Braun, Hans-Dieter, Dipl.-Ing., 78665 Frittlingen (DE)
(74) Vertreter: Westphal, Mussgnug & Partner Patentanwälte mbB

(56) Entgegenhaltungen:
- EP-A1- 0 515 002
- EP-A1- 0 791 432
- EP-A2- 0 480 416
- DE-A1-102006 037 434
- JP-A- 2007 152 531
- US-A- 4 929 130

## Beschreibung

Die Erfindung betrifft eine Schleifmaschine gemäß dem Oberbegriff des Patentanspruchs 1.

Schleifmaschinen weisen zur schleifenden Bearbeitung von Werkstücken ein Schleifwerkzeug (Schleifscheibe) auf, das durch eine Schleifspindel rotierend angetrieben wird. Während der Schleifbearbeitung wird ein Kühlmittel dem Schleifwerkzeug zugeführt, welches zum einen als Schmiermittel dient und zum anderen die beim Schleifprozess entstehende Wärme abführt. Weiter wird ein Scheibenschutz verwendet, der das Schleifwerkzeug über einen Teil des Umfangs abdeckt, um von dem rotierenden Schleifwerkzeug weggeschleudertes Kühlmittel und Materialpartikel abzufangen oder bei einem eventuellen Schleifscheibenbruch die Bruchstücke sicher zurückzuhalten.

Zur Erhöhung der Produktivität der Schleifmaschinen ist es bekannt, mehrere gleiche oder unterschiedliche Schleifwerkzeuge in einem Magazin bereitzuhalten, die automatisch an die Schleifspindel eingewechselt werden können. Ebenso ist es bekannt, Scheibenschutze in einem Magazin bereitzustellen, die automatisch eingewechselt und an dem Spindelgehäuse gespannt werden können. Schließlich ist es auch bekannt, Kühlmitteldüsen automatisch einzuwechseln.

Aus der DE 198 44 242 A1 ist eine Schleifmaschine bekannt, bei welcher Schleifwerkzeuge und diesen zugeordnete Kühlmitteldüsen jeweils gemeinsam in einem Magazin gespeichert sind. Das Spindelgehäuse kann numerisch gesteuert an den Speicher herangefahren werden, um jeweils ein Schleifwerkzeug und die zugeordnete Kühlmitteldüse in dem Magazin abzulegen und ein neues Schleifwerkzeug mit zugeordneter Kühlmitteldüse aus dem Magazin zu entnehmen. Schleifwerkzeug und Kühlmitteldüse werden stets gemeinsam gewechselt. Dadurch ist der Speicherplatzbedarf in dem Magazin erheblich. Eine Anpassung der Kühlmitteldüse an den sich durch Verschleiß ändernden Durchmesser des Schleifwerkzeugs ist nicht möglich.

Aus der DE 297 17 058 U1 und der DE 200 05 648 U1 ist es bekannt, das Kühlmittel über in dem Scheibenschutz ausgebildete Kanäle zuzuführen, die in einem an dem Scheibenschutz ausgebildeten Düsenkopf münden. Dabei kann der Düsenkopf schwenkbar an dem Scheibenschutz angebracht sein, um die Strahlrichtung des austretenden Kühlmittels auf den Umfang des Schleifwerkzeugs zu richten. Die Einstellung des Düsenkopfes erfolgt manuell beim Einbau des Scheibenschutzes, ein Nachstellen und insbesondere ein automatisches Nachstellen ist nicht möglich.

Aus der DE 10 2006 037 434 A1 ist eine Schleifmaschine bekannt, die zwei Magazine aufweist, wobei ein Magazin vorzugsweise Schleifwerkzeuge und das andere Magazin vorzugsweise Scheibenschutze aufnimmt. Das Spindelgehäuse kann numerisch gesteuert an die Magazine heranfahren, um das Schleifwerkzeug und/oder den Scheibenschutz auszuwechseln. Dadurch ist eine Flexibilität in Bezug auf die Kombination von Schleifwerkzeugen und Scheibenschutz möglich. Es kann beispielsweise ein verschlissenes Schleifwerkzeug gegen ein gleiches neues Werkzeug ausgewechselt werden, wobei kein Wechsel des Scheibenschutzes notwendig ist. Wird ein unterschiedliches Schleifwerkzeug eingewechselt, so kann gleichzeitig ein zu diesem anderen Schleifwerkzeug passender Scheibenschutz eingewechselt werden. Bei dieser Schleifmaschine können die Kühlmitteldüsen in den jeweiligen Scheibenschutz integriert sein und somit zusammen mit dem Scheibenschutz gewechselt werden. Allerdings sind die Kühlmitteldüsen fest in den Scheibenschutz integriert und können daher nicht in ihrer Einstrahlrichtung variiert werden.

Bei der Automatisierung der Schleifbearbeitung und der Schleifmaschinen ist es zunehmend üblich, eine durch den Verschleiß des Schleifwerkzeuges bedingte Ungenauigkeit der Schleifbearbeitung dadurch zu vermeiden, dass das Schleifwerkzeug automatisch abgerichtet wird. Das Abrichten des Schleifwerkzeuges führt zu einer Verringerung des Scheibendurchmessers des Schleifwerkzeugs. Der von der Kühlmitteldüse ausgebrachte Kühlmittelstrahl ist auf den Umfangspunkt des Schleifwerkzeugs gerichtet, mit welchem dieses an dem zu bearbeitenden Werkstück angreift. Die Verringerung des Radius des Schleifwerkzeugs hat zur Folge, dass der Kühlmittelstrahl nicht mehr auf den Umfang des Schleifwerkzeugs trifft, sondern an diesem vorbei läuft. Derselbe Effekt tritt selbstverständlich in verstärktem Maße auf, wenn das Schleifwerkzeug gegen ein Schleifwerkzeug mit kleinerem Durchmesser ausgewechselt wird, ohne dass gleichzeitig der Scheibenschutz gegen ein zu dem kleineren Durchmesser des Schleifwerkzeugs passenden Scheibehschutz ausgewechselt wird.

Der Erfindung liegt die Aufgabe zugrunde, eine Schleifmaschine zur Verfügung zu stellen, die eine Automatisierung mit einer hohen Flexibilität ermöglicht.

Diese Aufgabe wird erfindungsgemäß gelöst durch eine Schleifmaschine mit den Merkmalen des Patentanspruchs 1.

Vorteilhafte Ausführungen der Erfindung sind in den Unteransprüchen angegeben.

Der wesentliche Gedanke der Erfindung besteht darin, wenigstens eine an dem Scheibenschutz angeordnete Kühlmitteldüse an diesem Scheibenschutz verstellbar anzubringen. An dem die Schleifspindel tragenden Spindelgehäuse ist ein Antrieb angeordnet, durch welchen die Kühlmitteldüse gesteuert gegenüber dem Scheibenschutz verstellt werden kann, so dass die Richtung des Kühlmittelstrahls automatisch geändert werden kann, um den Kühlmittelstrahl einer geänderten Geometrie des Schleifwerkzeugs anzupassen, z. B. wenn sich der Durchmesser des Schleifwerkzeuges durch Abrichten ändert oder wenn ein Schleifwerkzeug mit einem anderen Durchmesser eingewechselt wird. Damit ein automatischer Wechsel des Scheibenschutzes möglich ist, ist der Antrieb bei an dem Spindelgehäuse gespanntem Scheibenschutz mit der Kühlmitteldüse ein- und auskoppelbar. Bei ausgekoppeltem Antrieb ist die Kühlmitteldüse von dem Antrieb getrennt, so dass der Scheibenschutz zusammen mit der Kühlmitteldüse gewechselt werden kann. Ist der Scheibenschutz an dem Spindelgehäuse befestigt, so wird der Antrieb eingekoppelt, so dass die Kühlmitteldüse an dem Scheibenschutz verstellt werden kann.

Durch die Verstellbarkeit der Kühlmitteldüse an dem Scheibenschutz ergeben sich wesentliche Vorteile im Hinblick auf die Flexibilität der Schleifmaschine und die Effektivität der durchzuführenden Schleifprozesse. Wird für eine Schleifbearbeitung stets ein gleiches Schleifwerkzeug verwendet, so kann die Kühlmitteldüse entsprechend diesem Schleifwerkzeug eingestellt werden. Bei einem Verschleiß des Schleifwerkzeugs und einem dadurch bedingten Abrichten kann die Kühlmitteldüse entsprechend der Verringerung des Durchmessers des Schleifwerkzeuges nachgefahren werden, um den Kühlmittelstrahl stets optimal auf den wirksamen Umfangspunkt des Schleifwerkzeugs zu richten. Die Kühlmittelzuführung kann dadurch automatisch stets optimal erfolgen. Wird ein verschlissenes Schleifwerkzeug gegen ein gleiches neues Schleifwerkzeug ausgewechselt, so ist kein Wechsel des Scheibenschutzes notwendig, sondern die Kühlmitteldüsen werden nur automatisch wieder auf den Umfang des neuen Schleifwerkzeugs eingestellt.

Wird eine andere Form oder eine andere Größe des Schleifwerkzeugs eingewechselt, so kann auch der Scheibenschutz gegen einen dem neuen Schleifwerkzeug angepassten Scheibenschutz ausgetauscht werden. Auch dieser Scheibenschutz ist vorzugsweise mit verstellbaren Kühlmitteldüsen ausgestattet, die in gleicher Weise mit dem Antrieb gekuppelt werden können.

Es ist selbstverständlich auch möglich, einen herkömmlichen Scheibenschutz ohne Kühlmitteldüsen oder mit integrierten feststehenden Kühlmitteldüsen zu verwenden. Das Einwechseln eines solchen herkömmlichen Scheibenschutzes erfolgt in gleicher Weise durch numerisch gesteuertes Verfahren des Spindelgehäuses. Bei in den Scheibenschutz integrierten Kühlmitteldüsen können diese über dieselben Anschlussstellen und Steuerventile des Spindelgehäuses gespeist werden wie die erfindungsgemäß verstellbaren Kühlmitteldüsen. Ist ein Scheibenschutz ohne verstellbare Kühlmitteldüsen gespannt, so bleibt der Antrieb selbstverständlich außer Funktion.

Es ist ohne weiteres ersichtlich, dass der Scheibenschutz erfindungsgemäß mit nur einer verstellbaren Kühlmitteldüse, mit zwei verstellbaren Kühlmitteldüsen oder auch mit einer verstellbaren und einer fest integrierten Kühlmitteldüse ausgebildet sein kann. Je nach der Ausbildung greift der Antrieb nur an der einen verstellbaren Kühlmitteldüse oder an beiden verstellbaren Kühlmitteldüsen an.

Die verstellbaren Kühlmitteldüsen sind linear verschiebbar in dem Scheibenschutz gelagert. Bei einer solchen linearen verschiebbaren Lagerung weist die Kühlmitteldüse insbesondere einen geraden Düsenschaft auf, der linear in einer Richtung verschiebbar ist, die parallel zu einer an dem Umfang des Schleifwerkzeugs anliegenden Tangente läuft. Um den Kühlmittelstrahl auf den Umfang des Schleifwerkzeugs zu richten, ist am Ende des geraden Düsenschaftes ein Düsenkopf angeordnet, der den Kühlmittelstrahl gegen das Schleifwerkzeug richtet.

Eine solche geradlinige Verschiebung der Kühlmitteldüse wird konstruktiv einfach dadurch realisiert, dass der Antrieb in eine an dem Düsenschaft angebrachte Kulissenbahn eingreift, welche die Bewegung des Antriebs in die Linearbewegung des Düsenschaftes umsetzt. Das Ein- und Auskoppeln des Antriebs wird dadurch bewirkt, dass der Antrieb mit dieser Kulissenbahn in Eingriff bzw. außer Eingriff kommt.

Eine besonders einfache Ausführung ergibt sich, wenn die Kulissenbahn im Wesentlichen senkrecht zu der linearen Verschiebungsrichtung des Düsenschaftes läuft und der Antrieb in diese Kulissenbahn mit einem auf einem Kreisbogen bewegten Koppelglied einreift. Die senkrecht zur Verschiebungsrichtung verlaufenden Kulissenbahn setzt die Kreisbogenbewegung des Koppelgliedes in die Linearbewegung des Düsenschaftes um. Das Ein- und Auskoppeln kann dabei in einfacher Weise dadurch erfolgen, dass die Kulissenbahn an ihrem einen Ende offen ist, so dass die Kulissenrolle am Ende ihrer Kreisbogenbewegung auf das Koppelglied am Ende seiner Kreisbogenbahn aus der Kulissenbahn austreten bzw. in diese eintreten kann.

Die Anordnung der wenigstens einen Kühlmitteldüse in dem Scheibenschutz ist durch die Ausbildung und Anordnung des Scheibenschutzes bzw. durch die Arbeitsweise der Schleifmaschine bedingt.

Greift das Schleifwerkzeug bei der Bearbeitung stets nur mit einem bestimmten Umfangspunkt an dem zu bearbeitenden Werkstück an, so kann der Scheibenschutz das Schleifwerkzeug über etwa den halben Umfang umgreifen. Es können zwei Kühlmitteldüsen auf den zueinander diametralen Umfangsseiten des Schleifwerkzeugs an dem Scheibenschutz angeordnet sein und parallel zueinander linear verschiebbar sein. In diesem Falle weisen die Düsenschäfte beider Kühlmitteldüsen jeweils eine Kulissenbahn auf. Der Antrieb greift jeweils mit einem Koppelglied in die Kulissenbahnen der zwei Kühlmitteldüsen ein, wobei der Antrieb des in die eine Kulissenbahn eingreifenden Koppelgliedes über eine quer verlaufende Welle auf das in die andere Kulissenbahn eingreifende Koppelglied übertragen wird.

Greift das Schleifwerkzeug mit einem größeren Umfangsbereich verstellbar an dem Werkstück an, so überdeckt der Scheibenschutz nur einen geringeren Umfangswinkel, z. B. nur etwa einen Quadranten des Umfangs des Schleifwerkzeugs. In diesem Falle sind vorzugsweise zwei Kühlmitteldüsen so an dem Scheibenschutz angeordnet, dass ihre Düsenschäfte im Wesentlichen rechtwinklig zueinander angeordnet sind und in rechtwinklig zueinander verlaufender Richtung verschiebbar sind. Ein einfacher synchroner Antrieb kann dadurch realisiert werden, dass an jedem Düsenschaft eine Zahnleiste angeordnet ist und an dem Kreuzungspunkt der beiden Zahnleisten ein frei drehbares Ritzel in beide Zahnleisten eingreift. In diesem Falle greift der Antrieb nur an einer Kühlmitteldüse an, um diese linear zu verschieben, während die andere Kühlmitteldüse über das Ritzel linear mitbewegt wird. Bei dieser Ausführung kommt der Antrieb nur auf der einen Seite mit der Kulissenbahn der einen Kühlmitteldüse in Eingriff. Die Koppelglied auf der anderen Seite läuft dabei leer. Der gleiche Antrieb kann somit sowohl für den Antrieb von zwei parallelen Kühlmitteldüsen als auch für den Antrieb von zwei rechtwinklig zueinander bewegbaren Kühlmitteldüsen verwendet werden.

Im Folgenden wird die Erfindung anhand von in der Zeichnung dargestellten Ausführungsbeispielen näher erläutert. Es zeigen:
- Figuren 1 bis 3: das Aufnehmen eines herkömmlichen Scheibenschutzes aus einem Magazin durch eine erfindungsgemäße Schleifmaschine, von welcher nur das Spindelgehäuse und die Spindel dargestellt ist,
- Figuren 4 und 5: der herkömmliche Scheibenschutz in Verbindung mit Schleifwerkzeugen mit unterschiedlichem Durchmesser,
- Figuren 6 bis 8: das Aufnehmen und Verstellen eines Scheibenschutzes gemäß der Erfindung in einer ersten Ausführung,
- Figuren 9 und 10: den erfindungsgemäßen Scheibenschutz in Verbindung mit Schleifwerkzeugen mit unterschiedlichem Durchmesser,
- Figuren 11 und 12: eine zweite Ausführung des Scheibenschutzes und
- Figuren 13 und 14: den Scheibenschutz in der zweiten Ausführung in Verbindung mit Schleifwerkzeugen mit unterschiedlichem Durchmesser.

Soweit die erfindungsgemäße Schleifmaschine dem bekannten Stand der Technik entspricht, ist die Schleifmaschine beispielsweise so aufgebaut, wie dies in der DE 10 2006 037 434 A1 beschrieben ist. Soweit die Schleifmaschine mit der in der DE 10 2006 037 434 A1 beschriebenen Schleifmaschine übereinstimmt, ist die Schleifmaschine in der Zeichnung nicht dargestellt und nachfolgend nicht im Einzelnen beschrieben.

Die Schleifmaschine weist ein Spindelgehäuse auf, welches numerisch gesteuert zumindest in der vertikalen Z-Achse und einer horizontalen X-Achse verfahrbar ist. Von dem Spindelgehäuse ist in der Zeichnung nur ein Träger 10 gezeigt. An dem Träger 10 ist eine Schleifspindel 12 angeflanscht, die mit einer zur Z-Achse senkrechten Achse rotierend antreibbar ist. Wie in der DE 10 2006 037 434 A1 im Einzelnen beschrieben ist, weist die Schleifmaschine ein Magazin auf, in welchem Schleifwerkzeuge (Schleifscheiben) 14 bereitgestellt sind. Weiter weist die Schleifmaschine ein Magazin auf, in welchem Scheibenschutze 16 bereitgestellt sind. Es können für die Schleifwerkzeuge 14 und die Scheibenschutze 16 getrennte Magazine vorgesehen sein oder die Schleifwerkzeuge 14 und die Scheibenschutze 16 können an unterschiedlichen Speicherplätzen desselben Magazins aufgenommen sein.

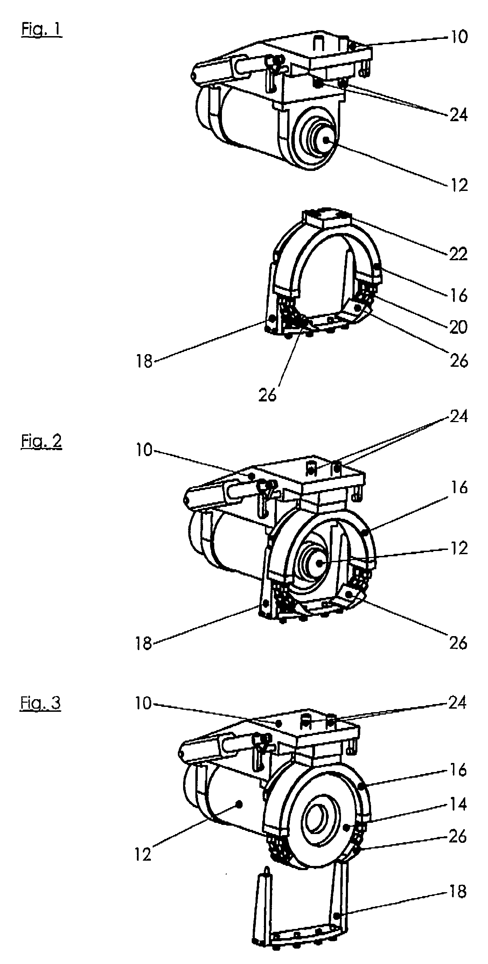

In den Figuren 1 bis 3 ist gezeigt, wie ein Scheibenschutz 16 aus dem Magazin entnommen und an dem Träger 10 gespannt wird. In Figur 1 befindet sich der Scheibenschutz 16 in einer Halterung 18 des Magazins. Das Spindelgehäuse wird numerisch gesteuert über den Scheibenschutz 16 gefahren und, wie in Figur 2 gezeigt ist, in der Z-Achse auf den Scheibenschutz 16 abgesenkt, so dass dieser an dem Träger 10 gespannt werden kann. Anschließend wird der Träger 10 in der Z-Achse hochgefahren, wie dies in Figur 3 gezeigt ist, um den gespannten Scheibenschutz 16 aus der Halterung 18 des Magazins zu entnehmen. Entsprechend kann ein Schleifwerkzeug 14 aus dem zugehörigen Magazin entnommen und an der Schleifspindel 12 gespannt werden. Hierzu wird das Spindelgehäuse numerisch gesteuert an das Magazin gefahren, um die Achse der Schleifspindel 12 mit der Achse des im Magazin gehaltenen ausgewählten Schleifwerkzeug 14 fluchtend auszurichten. Dann wird das Spindelgehäuse in der Axialrichtung der Schleifspindel 12 verfahren, so dass die Schleifspindel 12 das Schleifwerkzeug 14 aufnehmen und spannen kann. Je nach Ausbildung der Magazine können die Schleifwerkzeuge 14 und die Scheibenschutze 16 unabhängig voneinander oder gemeinsam gewechselt werden.

In den Figuren 1 bis 5 ist ein herkömmlicher Scheibenschutz 10 gezeigt. Der Scheibenschutz 16 weist fest in den Scheibenschutz 16 integrierte Kühlmitteldüsen 20 auf. Wird der Scheibenschutz 16 an dem Träger 10 gespannt, so werden die Kühlmitteldüsen 20 mit Anschlüssen 22 an Kühlmittelleitungen 24 des Spindelgehäuses angeschlossen. Von den Anschlüssen 22 führen in den Scheibenschutz 16 integrierte Kühlmittelkanäle jeweils zu einem Düsenkopf 26, der fest an dem Scheibenschutz 16 angebracht ist. Durch den Düsenkopf 26 tritt ein Kühlmittelstrahl 28 gegen das Schleifwerkzeug 14 gerichtet aus.

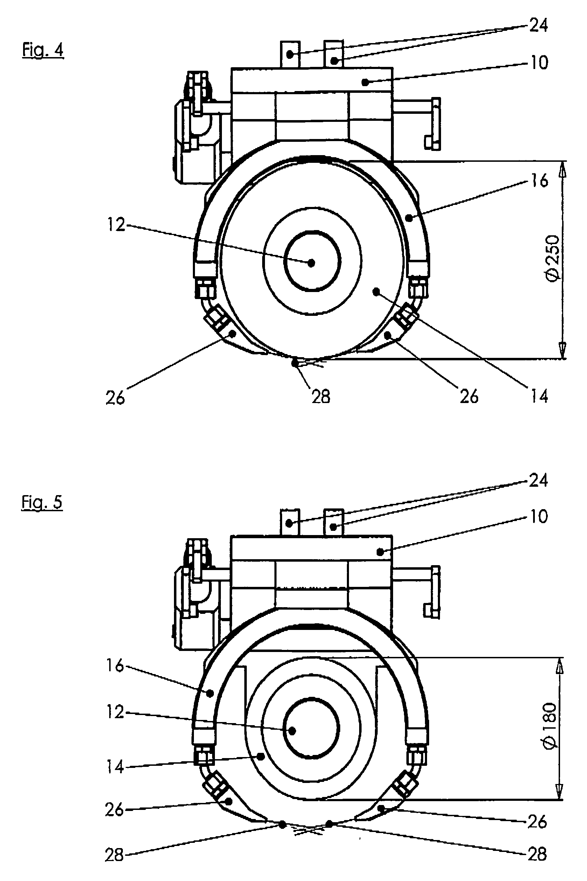

Bei einem solchen herkömmlichen Scheibenschutz 16 sind die Düsenköpfe 26 so an dem Scheibenschutz 16 angeordnet, dass die Kühlmittelstrahle 28 auf die Umfangsstelle des Schleifwerkzeuges 14 gerichtet sind, mit welcher das Schleifwerkzeug 14 an dem zu bearbeitenden Werkstück angreift. Dies ist in Figur 4 gezeigt.

Das Auftreffen des Kühlmittelstrahls 28 auf den wirksamen Umfangsbereich des Schleifwerkzeuges 14 ist für einen wirksamen Schleifvorgang und eine optimale Kühlung wichtig. Wird ein Schleifwerkzeug 14 mit einem kleineren Durchmesser an der Schleifspindel 12 gespannt, wie dies in Figur 5 dargestellt ist, oder verringert sich der Durchmesser des Schleifwerkzeuges 14 aufgrund des Abrichtens des Schleifwerkzeuges 14 bei zunehmendem Verschleiß, so treffen die Kühlmittelstrahle 28 nicht mehr auf den Umfang, sondern gehen außen am Umfang des Schleifwerkzeugs 14 vorbei, wie dies in Figur 5 dargestellt ist.

Bei den herkömmlichen Scheibenschutzen 16 muss daher bei einem Austausch des Schleifwerkzeuges 14 gegen einen anderen Typ von Schleifwerkzeugen auch der Scheibenschutz 16 gewechselt werden. Eine Verkleinerung des Durchmessers des Schleifwerkzeuges 14 durch ein Abrichten des Schleifwerkzeuges 14 verringert die Kühlmittelleistung oder macht ein Nachstellen oder Auswechseln des Scheibenschutzes 16 notwendig.

Bei der erfindungsgemäßen Schleifmaschine können aus diesem Grund nicht nur herkömmliche Scheibenschutze 16 mit fest integrierten Kühlmitteldüsen 20 gespannt werden, sondern auch Scheibenschutze mit verstellbaren Kühlmitteldüsen 20. Die Kühlmitteldüsen 20 sind in dem Scheibenschutz 16 verstellbar gelagert, so dass sie einem geänderten Durchmesser des Schleifwerkzeuges 14 nachgefahren und angepasst werden können. Das Verstellen der Kühlmitteldüsen 20 erfolgt numerisch gesteuert über die Schleifmaschine, so dass eine automatische Anpassung der Position der Kühlmitteldüsen und damit der Richtung des Kühlmittelstrahls 28 erfolgen kann, wenn das Schleifwerkzeug 14 gegen ein Schleifwerkzeug mit anderem Durchmesser ausgewechselt wird oder wenn das Schleifwerkzeug 14 abgerichtet wird. Die automatische Verstellung der Kühlmitteldüsen 20 ermöglicht die Verwendung desselben Scheibenschutzes 16 für Schleifwerkzeuge 14 mit unterschiedlichem Durchmesser, so dass ein Wechsel des Scheibenschutzes 16 seltener erforderlich ist, was die Nebenzeiten verringert und damit die Produktivität der Schleifmaschine steigert. Weiter können auch bei einem Abrichten des Schleifwerkzeugs 14 die Kühlmitteldüsen 20 dem reduzierten Durchmesser des Schleifwerkzeuges 14 nachgefahren werden, so dass die optimale Kühlmittelleistung ohne eine Unterbrechung des Maschinenbetriebs erhalten bleibt.

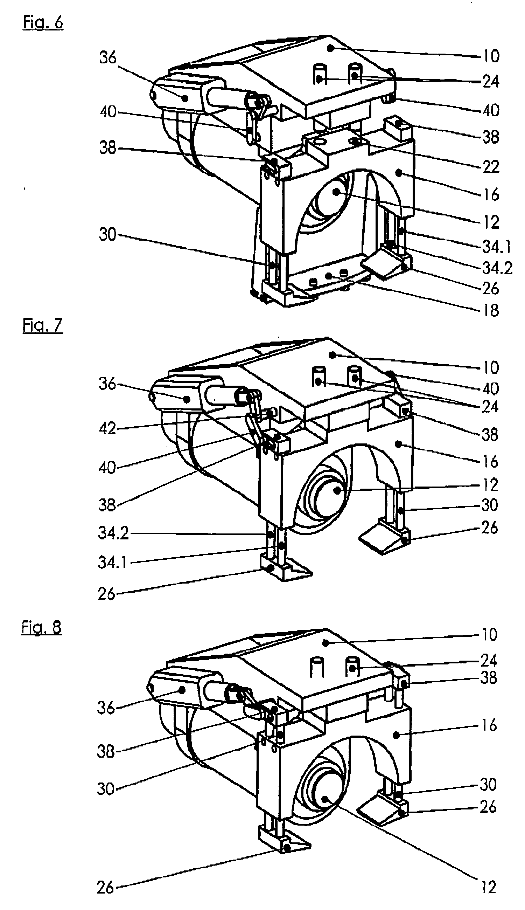

In den Figuren 6 bis 10 ist eine erste Ausführung des erfindungsgemäßen Scheibenschutzes 16 dargestellt.

Der Scheibenschutz 16 entspricht in der Aufnahme in das Magazin und in der Spannung an dem Träger 10 dem zuvor beschriebenen herkömmlichen Scheibenschutz 16. Der erfindungsgemäße Scheibenschutz 16 kann somit in demselben Magazin anstelle herkömmlicher Scheibenschutze 16 oder auch zusammen mit solchen Scheibenschutzen 16 bereitgestellt werden und kann in derselben Weise numerisch gesteuert aus dem Magazin entnommen und in das Magazin abgelegt werden.

In dem Ausführungsbeispiel der Figuren 6 bis 10 sind in dem Scheibenschutz 16 zwei Kühlmitteldüsen 20 höhenverstellbar gelagert. Die Kühlmitteldüsen 20 weisen jeweils einen geraden Düsenschaft 30 auf, der in dem Scheibenschutz 16 in seiner Achsrichtung linear verschiebbar geführt ist. An dem freien Ende des Düsenschaftes 30 ist jeweils ein Düsenkopf 26 angeordnet. Von den Anschlüssen 22 führen Kühlmittelkanäle 32 in dem Scheibenschutz 16 zu dem jeweiligen Düsenschaft 30. Um den Durchtritt des Kühlmittels von dem jeweiligen Kühlmittelkanal 32 zu dem Düsenschaft 30 bei einer linearen Verschiebung des Düsenschafts 30 zu ermöglichen, verläuft der Kühlmittelkanal 32 über eine gewisse axiale Hublänge entlang der Wandung des Düsenschaftes 30 und der Düsenschaft 30 steht über einen innerhalb dieser axialen Hublänge verschiebbaren Wanddurchbruch 33 mit dem Kühlmittelkanal 32 in Verbindung.

In dem dargestellten Ausführungsbeispiel sind zwei Anschlüsse 22 vorgesehen, die von der Maschinensteuerung gesteuert über die Kühlmittelleitung 24 mit Kühlmitteln gespeist werden. Die Anschlüsse 22 stehen jeweils über getrennte Kühlmittelkanäle 32 mit einem vorderen Kanal 34.1 bzw. einem hinteren Kanal 34.2 des Düsenschaftes 30 in Verbindung. Die Kanäle 34.1 und 34.2 münden in den Düsenkopf 26. Der Düsenkopf 26 kann jeweils eine vordere Austrittsöffnung und eine hintere Austrittsöffnung aufweisen, die getrennt voneinander über die Kanäle 34.1 bzw. 34.2 gesteuert gespeist werden. Dadurch ist es möglich, das Kühlmittel gesteuert dosiert auf die verschiedenen Umfangsbereiche des Schleifwerkzeugs 14 einzustrahlen. Ebenso ist es möglich, dass die Kanäle 34.1 und 34.2 des Düsenschaftes 30 in dem Düsenkopf 26 in eine gemeinsame Kammer münden, so dass die von den Kühlmittelleitungen 24 über die Anschlüsse 22 und die Kanäle 34.1 und 34.2 zugeführten Kühlmittelmengen vereinigt und gemeinsam eingestrahlt werden.

Zum linearen Verschieben der Düsenschäfte 30 dient ein Antrieb 36, der außen an einer Seite des Trägers 10 angeordnet ist. Der Antrieb 36 wird über die Schleifmaschine numerisch gesteuert. In dem dargestellten Ausführungsbeispiel ist der Antrieb als servopneumatischer Antrieb dargestellt. Alternativ können auch ein servohydraulischer oder ein elektromotorischer Antrieb verwendet werden. Der Antrieb 36 ist so ausgebildet und an dem Träger 10 angeordnet, dass er ein- und auskoppelbar in den Scheibenschutz 16 zum Verstellen der Kühlmitteldüsen 20 eingreift. Hierzu ist an dem oberen, dem Düsenkopf 26 entgegengesetzten Ende des Düsenschaftes 30 eine Kulissenbahn 38 angeordnet, die im Wesentlichen senkrecht zur linearen Verschiebungsrichtung des Düsenschaftes 30 verläuft. Die Kulissenbahn 38 ist an ihrem dem Antrieb 36 zugewandten Ende offen. Der Antrieb 36 betätigt ein Koppelglied 40, das um eine Schwenkachse 42 schwenkbar im Träger 10 gelagert ist. Das Koppelglied 40 ist im dargestellten Ausführungsbeispiel als Schwenkarm ausgebildet, an dessen freiem Ende eine Kulissenrolle gelagert ist.

Zur Aufnahme eines Scheibenschutzes 16 aus der Halterung 18 des Magazins wird der Antrieb 36 so gesteuert, dass das Koppelglied 40 vollständig nach unten geschwenkt ist und sich außerhalb des Scheibenschutzes 16 befindet, wie dies in Figur 6 gezeigt ist. Das Spindelgehäuse mit dem Träger 10 kann nun, wie oben beschrieben, an den im Magazin aufgenommenen Scheibenschutz 16 herangefahren werden und diesen spannen. Die Kühlmitteldüsen 20 werden dabei durch in dem Scheibenschutz 16 angeordnete Federn in ihrer nach unten gefahrenen Endstellung gehalten.

Ist der Scheibenschutz 16 an dem Träger 10 gespannt, wie dies in Figur 7 gezeigt ist, so wird das Koppelglied 40 durch den Antrieb 36 verschwenkt, so dass es mit seiner Kulissenrolle durch das offene Ende der Kulissenbahn 38 in die Kulissenbahn 38 eingeschwenkt wird. Damit kommt der Antrieb 36 mit der Kulissenbahn 38 und damit mit dem Düsenschaft 30 der Kühlmitteldüse 20 in Eingriff. Das Koppelglied 40 kann nun numerisch gesteuert durch den Antrieb 36 weiter nach oben geschwenkt werden, wobei die Kulissenrolle des Koppelgliedes 40 auf einer Kreisbahn bewegt wird und den Düsenschaft 30 über die Kulissenbahn 38 nach oben mitnimmt. Dadurch kann die Kühlmitteldüse 20 bis in ihre in Figur 8 gezeigte obere Endstellung verfahren werden.

Soll der Scheibenschutz 16 wieder in das Magazin abgegeben werden, so wird das Koppelglied 40 mittels des Antriebs 36 wieder nach unten verschwenkt, bis das Koppelglied 40 in der unteren Endstellung des Düsenschaftes 30 wieder aus dem offenen Ende der Kulissenbahn 38 austritt. Dadurch ist der Antrieb 36 von dem Scheibenschutz 16 und der Kühlmitteldüse 20 entkoppelt.

In dem Ausführungsbeispiel der Figuren 6 bis 10 umgreift der Scheibenschutz 16 das Schleifwerkzeug 14 um etwa den halben Umfang. Zwei Kühlmitteldüsen 20 sind diametral zueinander mit parallel verlaufenden Düsenschäften 30 in dem Scheibenschutz 16 gelagert. Die Kühlmitteldüsen 20 sind spiegelsymmetrisch zueinander ausgebildet und angeordnet. Jeder Düsenschaft 30 weist an seinem oberen Ende eine Kulissenbahn 38 auf. Das durch den Antrieb 36 betätigte Koppelglied 40 sitzt drehfest auf der als drehbar in dem Träger 10 gelagerte Welle ausgebildeten Schwenkachse 42. Auf der bezüglich der Ebene der Schleifspindel 12 gegenüberliegenden Seite des Trägers 10 sitzt auf der Welle 42 drehfest ein weiteres Koppelglied 40, welches gleich gestaltet ist und in gleicher Weise synchron in die Kulissenbahn 38 des zugehörigen Düsenschaftes 30 eingreift. Durch den Antrieb 36 werden somit die Koppelglieder 40 auf beiden Seiten des Trägers 10 über die Schwenkachse 42 synchron betätigt, um gemeinsam mit der jeweiligen Kühlmitteldüse 20 ein- und ausgekoppelt zu werden und diese Kühlmitteldüsen 20 synchron zu verstellen.

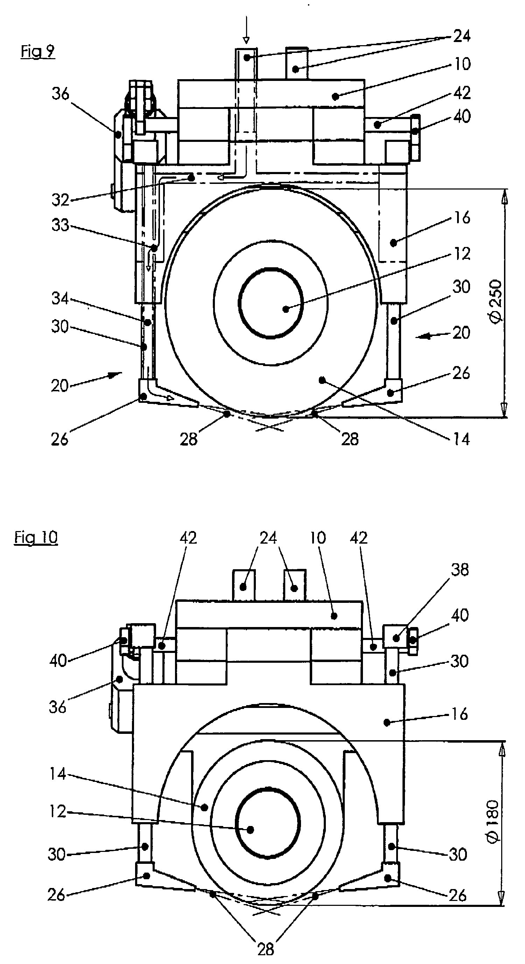

Die jeweils an den Düsenschäften 30 angeordneten und über diese gespeisten Düsenköpfe 26 sind nach innen gegen das Schleifwerkzeug 14 gerichtet. Wie in Figur 9 dargestellt ist, werden die Kühlmitteldüsen 20 bei einem Schleifwerkzeug 14 mit großem Durchmesser gesteuert nach unten gefahren, so dass die über ihre Düsenköpfe 26 eingestrahlten Kühlmittelstrahl 28 auf den wirksamen Umfangsbereich des Schleifwerkzeugs 14 auftreffen. Wird ein Schleifwerkzeug 14 mit kleinerem Durchmesser eingewechselt, wie dies in Figur 10 gezeigt ist, werden die Kühlmitteldüsen 20 mittels des Antriebs 36 synchron nach oben gefahren, so dass die Düsenköpfe 26 auch hier den Kühlmittelstrahl 28 exakt auf den wirksamen Umfangsbereich des Schleifwerkzeugs 14 richten. In gleicher Weise kann die Stellung der Kühlmitteldüsen 20 auch dem sich durch Abrichten des Schleifwerkzeugs 14 verringernden Durchmesser des Schleifwerkzeugs 14 nachgefahren werden.

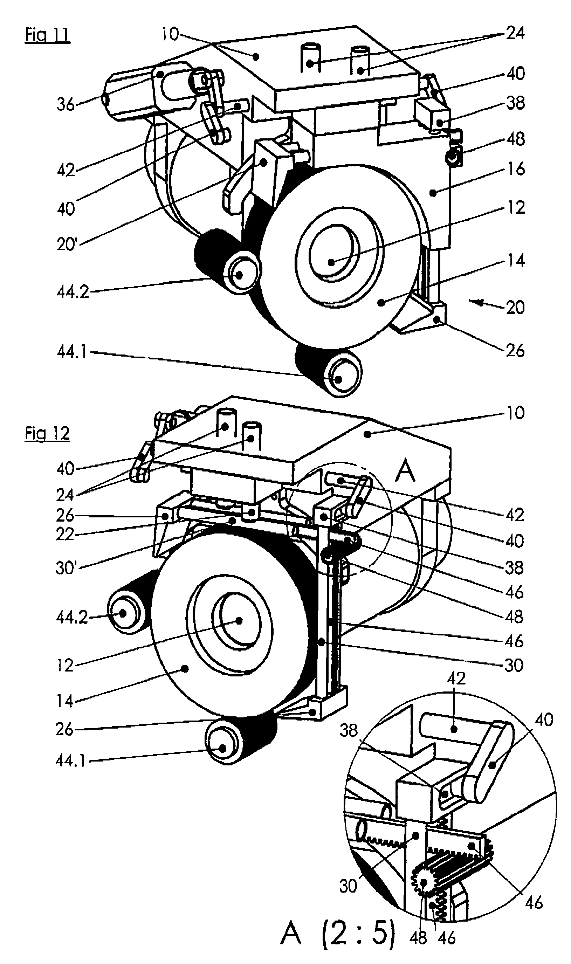

In den Figuren 11 bis 14 ist eine zweite Ausführungsform des erfindungsgemäßen Scheibenschutzes 16 dargestellt. Bei dem Ausführungsbeispiel der Figuren 6 bis 10 deckt der Scheibenschutz 16 das Schleifwerkzeug 14 über etwa den halben Umfang ab, so dass das Schleifwerkzeug 14 nur mit einem begrenzten Umfangsbereich an dem zu bearbeitenden Werkstück angreifen kann. Bei dem Ausführungsbeispiel der Figuren 11 bis 14 deckt der Scheibenschutz 16 dagegen das Schleifwerkzeug 14 nur über etwa einen Quadranten des Umfangs ab. Das Schleifwerkzeug 14 kann daher mit einem größeren Umfangswinkelbereich von etwa 90° an dem zu bearbeitenden Werkstück 44 angreifen. Dies ist in den Figuren 11 bis 14 durch die zwei Werkstückpositionen 44.1 und 44.2 kenntlich gemacht.

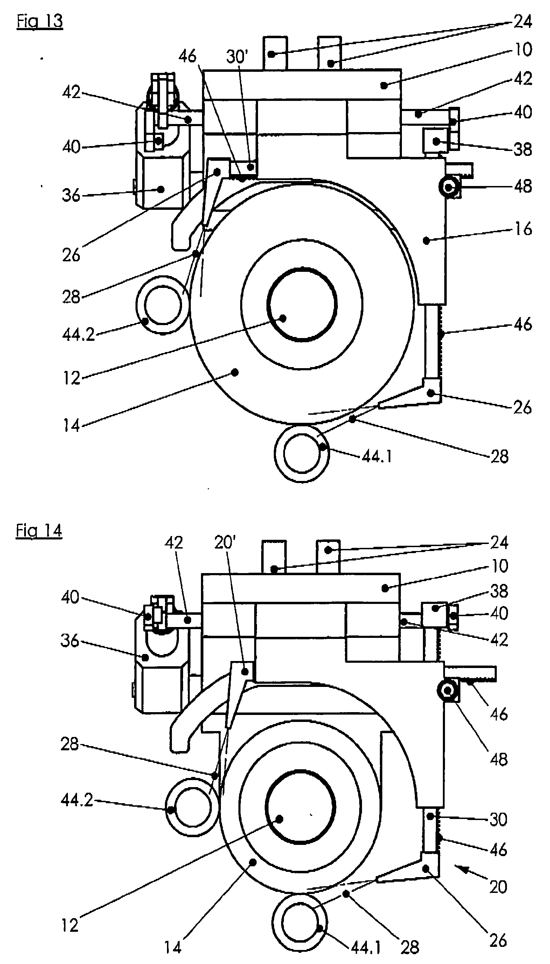

Wird das Schleifwerkzeug 14 an ein Werkstück 44 in der Position 44.1 zugestellt, so muss ein Kühlmittelstrahl 28 gegen den dieser Position entsprechenden Umfangsbereich des Schleifwerkzeugs 14 gerichtet werden. Wird das Schleifwerkzeug 14 gegen ein Werkstück 44 in der um 90° versetzten Werkstückposition 44.2 zugestellt, so muss ein Kühlmittelstrahl 28 auf den entsprechenden Umfangsbereich des Schleifwerkzeugs 14 gerichtet werden. Dies ist in Figur 13 dargestellt. Aufgrund dieser zwei um 90° gegeneinander versetzten Umfangsbereiche des Schleifwerkzeuges 14, die mit einem Kühlmittelstrahl 28 beaufschlagt werden müssen, sind die zwei Kühlmitteldüsen 20 in dem Scheibenschutz 16 unter einem gegenseitigen Winkel von etwa 90° zueinander angeordnet und unter diesem gegenseitigen Winkel von 90° jeweils linear verschiebbar in dem Scheibenschutz 16 gelagert. Die Düsenköpfe 26 der beiden Kühlmitteldüsen 20 sind dabei mit einer entsprechenden Strahlrichtung gegeneinander angeordnet, wie dies insbesondere in den Figuren 13 und 14 dargestellt ist.

Um die beiden Kühlmitteldüsen 20 in ihre jeweiligen linearen Verschiebungsrichtungen, die unter einem Winkel zueinander angeordnet sind, gesteuert verstellen zu können, ist die eine Kühlmitteldüse 20 in der gleichen Weise ausgebildet und in dem Scheibenschutz 16 angeordnet, wie dies anhand des ersten Ausführungsbeispiels beschrieben ist. Der Düsenschaft 30 ist senkrecht und somit rechtwinklig zu der Schwenkachse 42 angeordnet und weist an seinem oberen Ende die Kulissenbahn 38 auf. Der Antrieb 36 greift mit dem Koppelglied 40 ein- und auskoppelbar in die Kulissenbahn 38 ein, um den Düsenschaft 30 und mit diesem die Kühlmitteldüse 20 in der vertikalen Höhenposition zu verstellen.

Die andere Kühlmitteldüse 20' ist mit ihrem Düsenschaft 30' rechtwinklig, d. h. horizontal oben in dem Scheibenschutz 16 verschiebbar gelagert. Zum synchronen Antrieb der Kühlmitteldüse 20' ist sowohl der Düsenschaft 30 der Kühlmitteldüse 20 als auch der Düsenschaft 30' der Kühlmitteldüse 20' jeweils mit einer Zahnleiste 46 versehen, die in Längsrichtung des jeweiligen Düsenschaftes 30 bzw. 30' verlaufen und die gleiche Zahnteilung aufweisen. An dem Kreuzungspunkt der Zahnleisten 46 der beiden Düsenschäfte 30 und 30' ist ein Zahnritzel 48 angeordnet, welches um eine Achse frei drehbar gelagert ist, die senkrecht zu der von den Düsenschäften 30 und 30' aufgespannten Ebene verläuft. Das Zahnritzel 48 greift in die Zahnleisten 46 beider Düsenschäfte 30 und 30' ein. Wird der Düsenschaft 30 durch den eingekoppelten Antrieb 36 abwärts bewegt, so wird der Düsenschaft 30' der anderen Kühlmitteldüse 20' über das durch die Zahnleisten 46 und das Zahnritzel 48 gebildete Getriebe synchron in der Darstellung der Zeichnung nach links verschoben. Umgekehrt bewirkt eine Verstellung der Kühlmitteldüse 20 durch den Antrieb 36 nach oben eine Verschiebung der anderen Kühlmitteldüse 20' nach rechts.

Da in dieser Ausführung nur eine Kühlmitteldüse 20 unmittelbar durch den Antrieb 36 verschoben wird, würde für die Verstellung in dieser Ausführungsform an sich ein Koppelglied 40 genügen, welches in die Kulissenbahn 38 der angetriebenen Kühlmitteldüse 20 eingreift. Um an demselben Spindelgehäuse sowohl einen Scheibenschutz 16 gemäß den Figuren 6 bis 10 als auch einen Scheibenschutz 16 gemäß den Figuren 11 bis 14 spannen zu können, ist der Träger 10 auf beiden Seiten jeweils mit synchron angetriebenen Koppelgliedern 40 ausgestattet. Wird ein herkömmlicher Scheibenschutz gemäß den Figuren 1 bis 5 am Träger 10 gespannt, so greifen beide Koppelglieder 40 ins Leere und sind unwirksam. Wird ein Scheibenschutz 16 gemäß den Figuren 6 bis 10 gespannt, so greifen die Koppelglieder 40 an beiden Seiten des Trägers 10 in die jeweiligen Kulissenbahnen 38 der beiden parallel verschiebbaren Kühlmitteldüsen 20. Wird ein Scheibenschutz 16 gemäß den Figuren 11 bis 14 gespannt, so greift das eine Koppelglied 40 in die Kulissenbahn 38 der zugehörigen Kühlmitteldüse 20, während das andere Koppelglied 40 ins Leere greift und unwirksam ist.

### Bezugszeichenliste

- 10: Träger
- 12: Schleifspindel
- 14: Schleifwerkzeug
- 16: Scheibenschutz
- 18: Halterung

- 20: Kühlmitteldüsen
- 22: Anschlüsse
- 24: Kühlmittelleitungen
- 26: Düsenkopf
- 28: Kühlmittelstrahl

- 30: Düsenschaft
- 32: Kühlmittelkanäle
- 33: Wanddurchbruch
- 34: Kanal von 30
- 36: Antrieb
- 38: Kulissenbahn

- 40: Koppelglied
- 42: Schwenkachse
- 44: Werkstück
- 46: Zahnleiste
- 48: Zahnritzel

## Patentansprüche

1. Schleifmaschine mit einem Spindelgehäuse (10), mit einer Schleifspindel (12), mit in einem Magazin aufgenommenen Schleifwerkzeugen (14), die auswechselbar an der Schleifspindel (12) spannbar sind, mit in einem Magazin aufgenommenen Scheibenschutzen (16), die auswechselbar an dem Spindelgehäuse (10) spannbar sind, und mit an den Scheibenschutzen (16) angeordneten Kühlmitteldüsen (20),
**dadurch gekennzeichnet, dass** wenigstens eine Kühlmitteldüse (20) in Bezug auf das Schleifwerkzeug (14) verstellbar in dem Scheibenschutz (16) gelagert ist, dass an dem Spindelgehäuse (10) ein steuerbarer Antrieb (36) für die Verstellung der Kühlmitteldüse (20) angeordnet ist und dass der Antrieb (36) bei eingewechseltem Scheibenschutz (16) mit der Kühlmitteldüse (20) koppelbar und zum Auswechseln des Scheibenschutzes (16) auskoppelbar ist,
dass die wenigstens eine Kühlmitteldüse (20) einen geraden Düsenschaft (30) aufweist, der in einer in Bezug auf das Schleifwerkzeug (14) tangentialen Richtung linear verschiebbar in dem Scheibenschutz (16) gelagert ist, dass der Antrieb (36) koppelbar an dem Düsenschaft (30) angreift und dass der Düsenschaft (30) an seinem Ende in einen gegen das Schleifwerkzeug (14) gerichteten Düsenkopf (26) mündet,
dass an dem Düsenschaft (30) eine Kulissenbahn (38) angeordnet ist, dass der Antrieb (36) ein Koppelglied (40) aufweist, das zur Verstellung des Düsenschaftes (30) in Eingriff in die Kulissenbahn (38) gebracht wird und zum Auskoppeln außer Eingriff von der Kulissenbahn (38) kommt.

2. Schleifmaschine nach Anspruch 1,
**dadurch gekennzeichnet, dass** die Kulissenbahn (38) im Wesentlichen senkrecht zur linearen Verschiebungsrichtung des Düsenschaftes (30) verläuft, dass das Koppelglied (40) des Antriebs (36) im Wesentlichen auf einer Kreisbogenbahn bewegbar ist und dass das Koppelglied (40) zum Ein- und Auskoppeln in das offene Ende der Kulissenbahn (38) eintritt bzw. aus diesem Ende austritt.

3. Schleifmaschine nach einem der vorhergehenden Ansprüche,
**dadurch gekennzeichnet, dass** der Antrieb (36) ein servopneumatischer Antrieb, ein servohydraulischer Antrieb oder ein elektromotorischer Antrieb ist.

4. Schleifmaschine nach Anspruch 2,
**dadurch gekennzeichnet, dass** der Antrieb (36) an einer Seite des Spindelgehäuses (10) angeordnet ist und dass der Antrieb (36) über eine quer verlaufend in dem Spindelgehäuse (10) gelagerte Welle (42) ein an der entgegengesetzten Seite des Spindelgehäuses (10) angeordnetes Koppelglied (40) synchron bewegt.

5. Schleifmaschine nach einem der vorhergehenden Ansprüche,
**dadurch gekennzeichnet, dass** der Scheibenschutz (16) zwei bezüglich des Schleifwerkzeugs (14) diametral zueinander angeordnete Kühlmitteldüsen (20) aufweist, die parallel zueinander linear verstellbar sind.

6. Schleifmaschine nach Anspruch 4 und 5,
**dadurch gekennzeichnet, dass** beide Kühlmitteldüsen (20) jeweils einen Düsenschaft (30) mit einer Kulissenbahn (38) aufweisen und dass an beiden Seiten des Spindelgehäuses (10) jeweils das Koppelglied (40) in die Kulissenbahn (38) der entsprechenden Kühlmitteldüse (20) eingreift.

7. Schleifmaschine nach einem der Ansprüche 1 bis 4,
**dadurch gekennzeichnet, dass** der Scheibenschutz (16) zwei im Wesentlichen rechtwinklig zueinander angeordnete Kühlmitteldüsen (20, 20') aufweist, die rechtwinklig zueinander linear verstellbar sind.

8. Schleifmaschine nach Anspruch 7,
**dadurch gekennzeichnet, dass** eine erste der zwei Kühlmitteldüsen (20) einen Düsenschaft (30) mit einer Kulissenbahn (38) aufweist, in die der Antrieb (36) eingreift und dass die erste Kühlmitteldüse (20) die zweite Kühlmitteldüse (20') über ein in dem Scheibenschutz (16) angeordnetes Getriebe linear verschiebt.

9. Schleifmaschine nach Anspruch 8,
**dadurch gekennzeichnet, dass** an dem Düsenschaft (30) der ersten Kühlmitteldüse (20) und an dem Düsenschaft (30') der zweiten Kühlmitteldüse (20') jeweils eine Zahnleiste (46) ausgebildet ist und dass am Kreuzungspunkt der Zahnleisten (46) ein Zahnritzel (48) in beide Zahnleisten (46) eingreift.

10. Schleifmaschine nach einem der vorhergehenden Ansprüche,
**dadurch gekennzeichnet, dass** der Scheibenschutz (16) beim Spannen an dem Spindelgehäuse (10) mit wenigstens einem Anschluss (22) an eine Kühlmittelleitung (24) des Spindelgehäuses (10) angeschlossen wird, dass in dem Scheibenschutz (16) wenigstens ein Kühlmittelkanal (32) von dem wenigstens einen Anschluss (22) zu der wenigstens einen Kühlmitteldüse (20) führt und dass der Kühlmittelkanal (32) und die Kühlmitteldüse (20) über einen längsverschiebbaren Wanddurchbruch (33) miteinander in Verbindung stehen.

11. Schleifmaschinen nach einem der vorhergehenden Ansprüche,
**dadurch gekennzeichnet, dass** der Düsenschaft (30) zwei parallele Kanäle (34) für das Kühlmittel aufweist, die jeweils in einen Düsenkopf (26) münden.

12. Schleifmaschine nach einem der vorhergehenden Ansprüche,
**dadurch gekennzeichnet, dass** das Spindelgehäuse (10) das Magazin für die Schleifwerkzeuge (14) und das Magazin für die Scheibenschutze (16) zum Wechseln des Schleifwerkzeugs (14) und/oder des Scheibenschutzes (16) gesteuert anfahren kann.

## Claims

1. Grinding machine having a spindle housing (10), having a grinding spindle (12), having grinding tools (14) received in a magazine which are able to be tensioned interchangeably on the grinding spindle (12), having disc protectors (16) received in a magazine which are able to be tensioned interchangeably on the spindle housing (10), and having coolant nozzles (20) arranged on the disc protectors (16),
**characterised in that** at least one coolant nozzle (20) is mounted adjustably in the disc protector (16) with regard to the grinding tool (14); a controllable drive (36) for the adjustment of the coolant nozzle (20) is arranged on the spindle housing (10); and the drive (36) is able to be coupled to the coolant nozzle (20) in the case of a changed disc protector (16) and is able to be decoupled to exchange the disc protector (16);
the at least one coolant nozzle (20) has a straight nozzle shaft (30) which is mounted in the disc protector (16) to be linearly displaceable in a tangential direction with regard to the grinding tool (14); the drive (36) engages with the nozzle shaft (30) to be able to be coupled; and the nozzle shaft (30) flows into a nozzle head (26) directed against the grinding tool (14) at its end;
a sliding track (38) is arranged on the nozzle shaft (30); the drive (36) has a coupling link (40) which is brought into engagement with the sliding track (38) to adjust the nozzle shaft (30) and comes out of engagement from the sliding path (38) for decoupling.

2. Grinding machine according to claim 1,
**characterised in that** the sliding path (38) runs substantially perpendicularly to the linear displacement direction of the nozzle shaft (30); the coupling link (40) of the drive (36) is able to be moved substantially on a circular arc path; and the coupling link (40) enters into the open end of the sliding path (38) or exits from this end for coupling and decoupling.

3. Grinding machine according to one of the preceding claims,
**characterised in that** the drive (36) is a servo-pneumatic drive, a servo-hydraulic drive or an electromotive drive.

4. Grinding machine according to claim 2,
**characterised in that** the drive (36) is arranged on a side of the spindle housing (10); and the drive (36) moves a coupling link (40) arranged on the opposite side of the spindle housing (10) synchronously via a shaft (42) mounted in the spindle housing (10) to run transversely.

5. Grinding machine according to one of the preceding claims,
**characterised in that** the disc protector (16) has two coolant nozzles (20) arranged diametrally to each other with regard to the grinding tool (14), said coolant nozzles (20) being linearly displaceable in parallel to each other.

6. Grinding machine according to claim 4 and 5,
**characterised in that** both coolant nozzles (20) have a nozzle shaft (30) having a sliding path (38) respectively; and the coupling link (40) engages with the sliding path (38) of the corresponding coolant nozzle (20) on both sides of the spindle housing (10) respectively.

7. Grinding machine according to one of claims 1 to 4,
**characterised in that** the disc protector (16) has two coolant nozzles (20, 20') arranged substantially at right angles to each other, said coolant nozzles being linearly displaceable at right angles to each other.

8. Grinding machine according to claim 7,
**characterised in that** a first of the two coolant nozzles (20) has a nozzle shaft (30) having a sliding path (38) with which the drive (36) engages; and the first coolant nozzle (20) linearly displaces the second coolant nozzle (20') via a gear arranged in the disc protector (16).

9. Grinding machine according to claim 8,
**characterised in that** a toothed bar (46) is formed on the nozzle shaft (30) of the first coolant nozzle (20) and on the nozzle shaft (30') of the second coolant nozzle (20') respectively; and a toothed pinion (48) engages with both toothed bars (46) at the intersection point of the toothed bars (46).

10. Grinding machine according to one of the preceding claims,
**characterised in that** the disc protector (16) is connected, during tensioning on the spindle housing (10), to a coolant line (24) of the spindle housing (10) with at least one connection (22); at least one coolant channel (32) leads from the at least one connection (22) to the at least one coolant nozzle (20) in the disc protector (16); and the coolant channel (32) and the coolant nozzle (20) are connected to each other via a wall opening (33) which is longitudinally displaceable.

11. Grinding machines according to one of the preceding claims,
**characterised in that** the nozzle shaft (30) has two parallel channels (34) for the coolant which flow into a nozzle head (26) respectively.

12. Grinding machine according to one of the preceding claims,
**characterised in that** the spindle housing (10) can start up the magazine for the grinding tools (14) and the magazine for the disc protectors (16) in a controlled manner to change the grinding tool (14) and/or the disc protector (16).

## Revendications

1. Rectifieuse comprenant un boîtier de broche (10), une broche de rectification (12), des outils de rectification (14) logés dans un magasin qui peuvent être serrés de façon interchangeable sur la broche de rectification (12), des éléments de protection à disque (16) logés dans un magasin qui peuvent être serrés de façon interchangeable sur le boîtier de broche (10), ainsi que des buses d'agent de refroidissement (20) montées sur les éléments de protection à disque (16),
**caractérisée en ce qu'**
au moins une buse d'agent de refroidissement (20) est montée dans l'élément de protection à disque (16) en étant réglable par rapport à l'outil de rectification (14), sur le boîtier de broche (10) est installé un entraînement commandable (36) pour permettre le réglage de la buse d'agent de refroidissement (20), et, lorsque l'élément de protection à disque (16) a été mis en place, l'entraînement (36) peut être couplé à la buse d'agent de refroidissement (20) et être déconnecté pour permettre l'échange de l'élément de protection à disque (16),
la buse d'agent de refroidissement (20) comporte un arbre de buse rectiligne (30) qui est monté dans l'élément de protection à disque (16) en étant mobile en translation linéaire dans une direction tangentielle par rapport à l'outil de rectification (14), l'entraînement (36) vient en prise en pouvant être couplé sur l'arbre de buse (30), et l'arbre de buse (30) débouche à son extrémité dans une tête de buse (26) orientée contre l'outil de rectification (14),
sur l'arbre de buse (30) est installée une piste à coulisse (38), l'entraînement (36) comporte un organe d'accouplement (40) mis en prise dans la piste à coulisse (38) pour permettre de régler l'arbre de buse (30) et dégagé de la piste à coulisse (38) pour permettre la déconnexion.

2. Rectifieuse conforme à la revendication 1,
**caractérisée en ce que**
la piste à coulisse (38) s'étend essentiellement perpendiculairement à la direction de coulissement linéaire de l'arbre de buse (30), l'organe d'accouplement (40) de l'entraînement (36) est essentiellement mobile sur une piste en forme d'arc de cercle, et, pour permettre l'accouplement et la déconnexion, l'organe d'accouplement (40) pénètre dans l'extrémité ouverte de la piste à coulisse (38) ou sort de celle-ci.

3. Rectifieuse conforme à l'une des revendications précédentes,
**caractérisée en ce que**
l'entraînement (36) est un entraînement servo-pneumatique, un entraînement servo-hydraulique ou un entraînement électro-motorisé.

4. Rectifieuse conforme à la revendication 2,
**caractérisée en ce que**
l'entraînement (36) est monté d'un côté du boîtier de broche (10) et déplace en synchronisme par l'intermédiaire d'un arbre (42) monté transversalement dans le boîtier de broche (10) un organe d'accouplement (40) situé sur le côté opposé du boîtier de broche (10).

5. Rectifieuse conforme à l'une des revendications précédentes,
**caractérisée en ce que**
l'élément de protection à disque (16) comporte deux buses d'agent de refroidissement (20) diamétralement opposées par rapport à l'outil de rectification (14) et qui peuvent être réglées linéairement parallèlement l'une à l'autre.

6. Rectifieuse conforme à la revendication 4 ou 5,
**caractérisée en ce que**
les deux buses d'agent de refroidissement (20) comportent chacune un arbre de buse (30) équipé d'une piste à coulisse (38), et, sur les deux côtés du boîtier de broche (10) l'organe d'accouplement (40) vient respectivement en prise dans la piste à coulisse (38) de la buse d'agent de refroidissement (20) correspondante.

7. Rectifieuse conforme à l'une des revendications 1 à 4,
**caractérisée en ce que**
l'élément de protection à disque (16) comporte deux buses d'agent de refroidissement (20, 20') montés essentiellement perpendiculairement l'une par rapport à l'autre qui peuvent être réglées linéairement perpendiculairement l'une à l'autre.

8. Rectifieuse conforme à la revendication 7,
**caractérisée en ce qu'**
une première des deux buses d'agent de refroidissement (20) comporte un arbre de buse (30) ayant une piste à coulisse (38) dans laquelle l'entraînement (36) vient en prise, et, la première buse d'agent de refroidissement (20) déplace la seconde buse d'agent de refroidissement (20') par coulissement linéaire par l'intermédiaire d'une transmission montée dans l'élément de protection à disque (16).

9. Rectifieuse conforme à la revendication 8,
**caractérisée en ce qu'**
une crémaillère dentée (46) est respectivement formée sur l'arbre de buse (30) de la première buse d'agent de refroidissement (20) et sur l'arbre de buse (30') de la seconde buse d'agent de refroidissement (20'), et, au niveau du croisement de ces crémaillères (46) un pignon (48) engrène dans celles-ci.

10. Rectifieuse conforme à l'une des revendications précédentes,
**caractérisée en ce que**
lors du serrage sur le boîtier de broche (10) l'élément de protection à disque (16) est connecté par au moins un raccord (22) sur une conduite d'agent de refroidissement (24) du boîtier de broche (10), dans l'élément de protection à disque (16) au moins un canal de refroidissement (32) conduit du raccord (22) à la buse d'agent de refroidissement (20) et le canal d'agent de refroidissement (32) et la buse d'agent de refroidissement (20) sont reliés au moyen d'une rupture de paroi (33) mobile longitudinalement.

11. Rectifieuse conforme à l'une des revendications précédentes,
**caractérisée en ce que**
l'arbre de buse (30) comporte deux canaux parallèles (34) pour l'agent de refroidissement qui débouchent chacun dans une tête de buse (26).

12. Rectifieuse conforme à l'une des revendications précédentes,
**caractérisée en ce que**
le boîtier de broche (10), le magasin pour les outils de rectification (14) et le magasin pour les éléments de protection à disque (16) peuvent être déplacés de façon commandée pour permettre un changement d'outil de rectification (14) et/ou d'élément de protection à disque (16).
